# EUROPEAN PATENT APPLICATION

(11) **EP 4 491 473 A1**
(43) Date of publication of application: **15.01.2025**
(21) Application number: 23765892.7
(22) Date of filing: 03.03.2023
(51) Int. Cl.: B60W 10/119, B60W 10/08, B60W 10/10, B60W 20/40, B60W 20/20

(54) **FOUR-WHEEL DRIVE HYBRID VEHICLE CONTROL METHOD AND APPARATUS, VEHICLE, AND STORAGE MEDIUM**

(30) Priority: 10.03.2022 CN 202210240879
(71) Applicant: Great Wall Motor Company Limited, Hebei 071000 (CN)
(72) Inventor: JIA, Yihao, Baoding, Hebei 071000 (CN); CUI, Wenxia, Baoding, Hebei 071000 (CN)
(74) Representative: Klunker IP Patentanwälte PartG mbB
(86) International application number: PCT/CN2023/079458
(87) International publication number: WO 2023/169314

(57) **Abstract**

The present disclosure is applicable to the technical field of vehicle control, and provides a control method and apparatus for a four-wheel drive hybrid vehicle, a vehicle, and a storage medium. In the control method for the four-wheel drive hybrid vehicle, a gear state of a front axle gearbox and a gear state of a rear axle gearbox are acquired, when the gear state of the front axle gearbox is in gear shifting, a front axle drive motor needs to provide a torque to make a torque at a crankshaft end of an engine zero, the front axle drive motor is controlled to maintain a current torque ratio to prevent the power loss caused by the torque ratio of the front axle drive motor continuously increasing beyond a motor capacity. When the gear state of the rear axle gearbox is in gear shifting, the rear axle drive motor cannot continue to output power, the torque ratio of the front axle drive motor is controlled to increase to a preset ratio, thereby reducing the power loss of the vehicle and improving the driving smoothness of the vehicle.

## Description

The present disclosure claims the priority of the Chinese patent application filed on March 10th, 2022 before the Chinese Patent Office with the application number of 202210240879.1, and the title of "CONTROL METHOD AND APPARATUS FOR FOUR-WHEEL DRIVE HYBRID VEHICLE, AND VEHICLE".

### TECHNICAL FIELD

The present disclosure belongs to the technical field of vehicle control and more particularly, relates to a control method and apparatus for a four-wheel drive hybrid vehicle, vehicle, and storage medium.

### BACKGROUND

DHT (Dedicated Hybrid Technology) is used in a highly integrated oil-electric hybrid system, which integrates the main components of a hybrid specific engine, GM/TM dual motor, dual motor controller, integrated DCDC, and fixed-shaft gearbox together, so that it can obtain smaller volume, lighter weight and higher transmission efficiency than traditional fuel power assembly.

At present, the front and rear axle torque distribution of the DHT vehicle does not consider the front and rear axle gearbox shifting and the actual gear, which may cause the vehicle torque uneven, or power loss during the shifting process.

### SUMMARY

The embodiments of the present disclosure provide: a control method and apparatus for a four-wheel drive hybrid vehicle, a vehicle, and a storage medium.

The technical solutions adopted in the embodiments of the present disclosure are:

In a first aspect, the embodiment of the present disclosure provides a control method for the four-wheel drive hybrid vehicle, including:
acquiring a gear state of a front axle gearbox and a gear state of a rear axle gearbox;
controlling a front axle drive motor to maintain a current torque ratio when the gear state of the front axle gearbox is in gear shifting;
controlling the torque ratio of the front axle drive motor to increase to a preset ratio when the gear state of the rear axle gearbox is in gear shifting.

In one embodiment, the control method for the four-wheel drive hybrid vehicle further includes:
acquiring an operation mode of the vehicle;
controlling the front axle drive motor to maintain the current torque ratio when the operation mode of the vehicle is in a process of switching from the series mode to the engine direct drive mode.

In one embodiment, the control method for the four-wheel drive hybrid vehicle further includes:
controlling the torque ratio of the front axle drive motor to increase to 100% when the gear state of the rear axle gearbox is in neutral for a duration greater than a preset time.

In one embodiment, the controlling the torque ratio of the front axle drive motor to increase to the preset ratio when the gear state of the rear axle gearbox is in the gear shifting, includes:
acquiring a first rate for unloading a torque ratio of a rear axle drive motor;
controlling the front axle drive motor to increase the torque ratio to the preset ratio according to the first rate.

In a second aspect, the embodiment of the present disclosure provides a control apparatus for a four-wheel drive hybrid vehicle, including:
a first acquisition module, configured for acquiring a gear state of a front axle gearbox and a gear state of a rear axle gearbox;
a first control module, configured for controlling a front axle drive motor to maintain a current torque ratio when a gear state of the front axle gearbox is in gear shifting;
a second control module, configured for controlling the torque ratio of the front axle drive motor to increase to a preset ratio when the gear state of the rear axle gearbox is in gear shifting.

In one embodiment, the control apparatus for the four-wheel drive hybrid vehicle further includes:
a second acquisition module, configured for acquiring an operation mode of the vehicle;
a third control module, configured for controlling the front axle drive motor to maintain a current torque ratio when the operation mode of the vehicle is in the process of switching from a series mode to an engine direct drive mode.

In one embodiment, the control apparatus for the four-wheel drive hybrid vehicle further includes:
a fourth control module, configured for controlling the torque ratio of the front axle drive motor to increase to 100% when the gear state of the rear axle gearbox is in neutral for a duration greater than a preset time.

In one embodiment, the second control module includes:
an acquisition unit, configured for acquiring a first rate for unloading a torque ratio of a rear axle drive motor;
a control unit, configured for controlling the torque ratio of the front axle drive motor to increase to the preset ratio according to the first rate.

In a third aspect, the embodiment of the present disclosure provides a vehicle including a memory, a controller, and a computer program stored in the memory and operable on the controller, which when executed by the controller implements the control method for the four-wheel drive hybrid vehicle according to any one of the first aspects.

In a fourth aspect, the embodiment of the present disclosure provides a computer-readable storage medium storing a computer program which, when executed by a controller, implements the control method for the four-wheel drive hybrid vehicle according to any one of the first aspects.

In a fifth aspect, the embodiments of the present disclosure provide a computer program product which, when run on a terminal device, causes the terminal device to perform the control method for the four-wheel drive hybrid vehicle of any one of the above-mentioned first aspects.

The beneficial effects of the technical solutions provided in the embodiments of the present disclosure are: by acquiring the gear shift state of the front axle gearbox and the gear shift state of the rear axle gearbox, when the gear state of the front axle gearbox is in the gear shifting, the front axle drive motor needs to provide a torque to make the torque at the crankshaft end of the engine zero, and at this time, the front axle drive motor is controlled to maintain the current torque ratio, so as to prevent the power loss caused by the torque ratio of the front axle drive motor continuously increasing beyond a motor capacity. When the gear state of the rear axle gearbox is in the gear shifting, the rear axle drive motor cannot continue to output power, the torque ratio of the front axle drive motor is controlled to increase to the preset ratio, thereby reducing the power loss of the vehicle and improving the driving smoothness of the vehicle.

It will be appreciated that the beneficial effects of the second to fifth aspects described above can be seen in relation to the description of the first aspect described above and will not be described further herein.

### BRIEF DESCRIPTION OF THE DRAWINGS

In order to explain the technical solutions in the embodiments of the present disclosure more clearly, a brief description will be given below with reference to the accompanying drawings which are used in the embodiment or exemplary technical description, and it is obvious that the drawings in the following description are only some embodiments of the present disclosure, and it would have been obvious for a person skilled in the art to obtain other drawings according to these drawings without creative work.
FIG. 1 is a flow chart of a control method for a four-wheel drive hybrid vehicle according to an embodiment of the present disclosure;
FIG. 2 is a flow chart of a control method for a four-wheel drive hybrid vehicle according to another embodiment of the present disclosure;
FIG. 3 is a flow chart of a control method for a four-wheel drive hybrid vehicle according to yet another embodiment of the present disclosure;
FIG. 4 is a schematic structural diagram of a control apparatus for a four-wheel drive hybrid vehicle according to an embodiment of the present disclosure; and
FIG. 5 is a schematic structural diagram of a vehicle according to an embodiment of the present disclosure.

### DETAILED DESCRIPTION

In the following description, for purposes of explanation and not limitation, specific details are set forth such as particular system architectures, techniques, etc. in order to provide a thorough understanding of the embodiments of the present disclosure. However, it will be apparent to a person skilled in the art that the present disclosure may be practiced in other embodiments that depart from these specific details. In other instances, detailed descriptions of well-known systems, apparatus, circuits, and methods are omitted so as not to obscure the description of the present disclosure with unnecessary detail.

It will be understood that the terms "comprising" and/or "including", when used in the specification and the appended claims of the present disclosure, specify the presence of stated features, integers, steps, operations, elements, and/or components, but do not preclude the presence or addition of one or more other features, integers, steps, operations, elements, components, and/or groups thereof.

It should also be understood that the term "and/or" as used in the specification and the appended claims of the present disclosure refers to and includes any and all possible combinations of one or more of the associated listed items.

As used in the specification and in the appended claims of the present disclosure, the term "if" may be interpreted contextually as "when" or "once" or "in response to a determination" or "in response to a detection". Similarly, the phrase "if determined" or "if a [described condition or event] is detected" can be interpreted, depending on the context, to mean "upon determination" or "in response to determination" or "upon detection of a [described condition or event]" or "in response to detection of a [described condition or event]".

In addition, in the specification and the appended claims of the present disclosure, the terms "first", "second", "third", and the like are used for descriptive purposes only and are not to be construed as indicating or implying relative importance.

Reference in the specification to "one embodiment" or "some embodiments" or the like means that a particular feature, structure, or characteristic described in connection with the embodiment is included in one or more embodiments of the present disclosure. Thus, appearances of the phrases "in one embodiment", "in some embodiments", "in another embodiments", "in yet another embodiments", and the like in various places throughout this specification are not necessarily all referring to the same embodiment, but are intended to mean "one or more but not all embodiments" unless specifically stated otherwise. The terms "comprising", "including", "having", and variations thereof mean "including but not limited to" unless specifically stated otherwise.

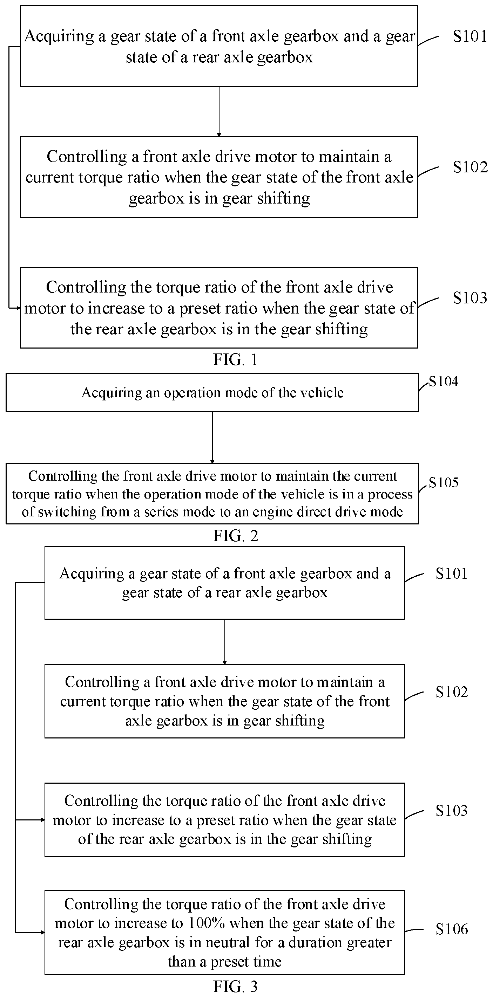

FIG. 1 is a flow chart of a control method for a four-wheel drive hybrid vehicle according to an embodiment of the present disclosure. Referring to FIG. 1, the control method for the four-wheel drive hybrid vehicle includes steps S101 to S103.

Step S101, acquiring a gear state of a front axle gearbox and a gear state of a rear axle gearbox.

In particular, the controller on the vehicle may acquire the gear state of the front axle gearbox and the gear state of the rear axle gearbox by analyzing signals transmitted by sensors or other electronic components on the vehicle.

Step S102, controlling a front axle drive motor to maintain a current torque ratio when the gear state of the front axle gearbox is in gear shifting.

Specifically, when the front axle gearbox shifts, the torque at the crankshaft end of the engine is required to be zero to shift, but in order to ensure that the engine is in an efficient operating region, the front axle drive motor is required to provide a negative torque to counterbalance the torque at the crankshaft end of the engine, so that the total torque at the crankshaft end of the engine is zero. In the prior art, the torque ratio of the front axle drive motor would be increased, but the continuous increase of the torque ratio of the front axle drive motor would exceed the capacity of the motor, which may cause the power loss of the front axle drive motor and affect the smooth driving. At this time, the front axle drive motor is controlled to maintain the current torque ratio, and the front axle drive motor uses the current output torque to counterbalance the torque at the crankshaft end of the engine, so that the total torque at the crankshaft end of the engine is zero, preventing the power loss caused by the torque ratio of the front axle drive motor continuously increasing beyond the motor capacity , and improving the driving smoothness of the vehicle.

In an embodiment of the present disclosure, in order to control the front axle drive motor to maintain the current torque ratio, a filtering module with a very small gradient may be added to the vehicle, and during the front axle gearbox shifting, the filtering module controls the torque ratio of the front axle drive motor to slowly increase to substantially maintain the current value, without causing the problem that the torque ratio of the front axle drive motor increases too much to cause the power loss.

Step S103, controlling the torque ratio of the front axle drive motor to increase to a preset ratio when the gear state of the rear axle gearbox is in gear shifting.

Specifically, the front axle drive motor and the rear axle drive motor both fully output the torque according to the current torque limit value under an intense driving condition of the vehicle, and the current maximum discharge power of the battery affects the torque limit value of the motor under this condition. If the rear axle gearbox shifts at this time, the rear axle drive motor needs to perform speed regulation and shift and cannot continue to output power, resulting in power loss of the vehicle and affecting the driving smoothness of the vehicle.

When the gear state of the rear axle gearbox is in the gear shifting, the torque ratio of the front axle drive motor is controlled to increase to the preset ratio, the torque of the front axle drive motor is increased, the power lost due to the gear shifting of the rear axle gearbox is supplemented by the front axle drive motor, the power loss of the vehicle is minimized, and the driving smoothness of the vehicle is improved.

It should be noted that the designer may set specific data of the preset ratio according to actual requirements, preferably, the preset ratio is 90%-100%, and most preferably, the preset ratio is 100%. When the preset ratio is 100%, controlling the torque ratio of the front axle drive motor to increase to 100% when the gear state of the rear axle gearbox is in the gear shifting, and at this time, all the power of the battery on the vehicle is distributed to the front axle drive motor, and the front axle drive motor supplements the power lost due to the gear shift of the rear axle gearbox, so as to minimize the power loss of the vehicle and improve the driving smoothness of the vehicle.

Illustratively, step S103 may specifically include step S 1031 and step S1032.

Step S 1031, acquiring a first rate for unloading a torque ratio of the rear axle drive motor.

Specifically, the controller on the vehicle has shift logic therein and determines whether the rear axle gearbox needs to be shifted by integrating various parameters of the vehicle (for example, a vehicle speed, an opening degree of an accelerator pedal stepped on by a driver, and transmission data). When a controller on the vehicle sends a shift request, the torque ratio of the rear axle drive motor is controlled to be unloaded at the first rate, and when the torque ratio of the rear axle drive motor is zero, the rear axle gearbox can complete the shift.

The first rate may be a fixed value preset by the designer or maybe real-time data calculated by the controller from the current parameters of the vehicle. The first rate is used to represent the speed at which the torque ratio of the rear axle drive motor decreases, and the greater the first rate is, the faster the torque ratio of the rear axle drive motor decreases; the smaller the first rate, the slower the torque ratio of the rear axle drive motor decreases.

Step S1032, controlling the front axle drive motor to increase the torque ratio to the preset ratio according to the first rate.

Specifically, during the gear shifting of the rear axle gearbox, the rear axle drive motor reduces the torque ratio to zero at the first rate. At this time, the front axle drive motor is controlled to increase the torque ratio to the preset ratio according to the first rate, the rate for increasing the torque ratio of the front axle drive motor is equal to the rate for decreasing the torque ratio of the rear axle drive motor, and the increased torque of the front axle drive motor compensates for the decrease of the torque of the rear axle drive motor, so that the power of the vehicle is kept stable and the smoothness of the vehicle when the rear axle gearbox is shifting is improved.

For example, the preset ratio is 100%, the torque of the rear axle drive motor before the gear shifting of the rear axle gearbox is 500Nm, and the torque ratio is 50%; the torque of the front axle drive motor is 500Nm and the torque ratio is 50%. The torque unloading rate of the rear axle drive motor is 500Nm/s and the unloading rate of the torque ratio is 50%/s during the gear shifting of the rear axle gearbox; the torque increase speed of the front axle drive motor is 500Nm/s, and the increase rate of the torque ratio is 50%/s. This ensures that the total torque of the vehicle remains stable during the gear shifting of the rear axle gearbox and improves the smoothness of the vehicle during the gear shifting of the rear axle gearbox.

FIG. 2 is a flow chart of a control method for a four-wheel drive hybrid vehicle according to another embodiment of the present disclosure. Referring to FIG. 2, the control method for the four-wheel drive hybrid vehicle further includes step S104 and step S105.

Step S 104, acquiring an operation mode of the vehicle.

Specifically, the operation modes of the four-wheel drive hybrid vehicle include an EV mode, a series mode, and a parallel mode. In the EV mode, the vehicle is directly driven by the drive motor. In the series mode, the engine drives a generator to generate electricity, the generator provides energy to the drive motor, and the drive motor directly drives the vehicle. In parallel mode, the engine directly drives the vehicle, and the generator and drive motor are responsible for adjusting the engine operating point and auxiliary drive.

By analyzing the signals transmitted by sensors or other electronic components on the vehicle, the current operation mode of the vehicle can be obtained.

Step S105, controlling the front axle drive motor to maintain the current torque ratio when the operation mode of the vehicle is in a process of switching from the series mode to the engine direct drive mode.

Specifically, when the operation mode of the vehicle is in the process of switching from the series mode to the engine direct drive mode, the driving mode of the vehicle is switched from a mode of the purely electric drive to a mode that the engine and the drive motor jointly drives the vehicle. Due to the slow rise of the engine torque, the actual torque of the engine is less than the target torque during the mode switching, and the front axle drive motor needs to compensate for the torque. As a result, the torque of the front axle drive motor increases rapidly, the torque of the front axle drive motor increases too rapidly, which may cause the front and rear axle torques to be uneven, and when the torque of the front axle drive motor exceeds the capacity of the drive motor, the power of the front axle drive motor may be lost.

In order to solve the above-mentioned problem, when the operation mode of the vehicle is in the process of switching from the series mode to the engine direct drive mode, the front axle drive motor is controlled to maintain the current torque ratio, so that the front axle drive motor uses the existing torque to compensate the torque of the engine, thereby preventing the problem that the torque ratio of the front axle drive motor increases too much to cause the power loss.

FIG. 3 is a flow chart of a control method for a four-wheel drive hybrid vehicle according to yet another embodiment of the present disclosure. Referring to FIG. 3, the control method for the four-wheel drive hybrid vehicle further includes step S 106.

Step S 106, controlling the torque ratio of the front axle drive motor to increase to 100% when the gear state of the rear axle gearbox is in neutral for a duration greater than a preset time.

Specifically, in the process of powering on the vehicle, if the rear axle gearbox fails to self-learn, the rear axle gearbox will always be in N gear (neutral), at this time, the rear axle drive motor has no power output, and at this time, if the torque proportioning is still performed on the rear axle drive motor, it will cause the problems of energy waste and insufficient power of the vehicle. When the duration of the gear of the rear axle gearbox being in neutral is greater than the preset time, it indicates that the rear axle gearbox fails to self-learn, and the rear axle gearbox is always in N gear; at this time, the torque ratio of the front axle drive motor is controlled to increase to 100%, the torque ratio of the front axle drive motor is increased, to compensate for the torque loss of the rear axle drive motor, thereby maintaining sufficient power of the vehicle, and ensuring that the vehicle can run normally when the gear state of the rear axle gearbox is in neutral.

It should be noted that the designer may set the specific value of the preset time according to actual requirements. For example, the preset time is set to 3s, 5s, or other time.

It should be understood that the size of the sequence number of each step in the above-described embodiments does not imply the order of execution and that the order of execution of each process should be determined by its function and inherent logic and should not constitute any limitation on the implementation of the embodiments of the present disclosure.

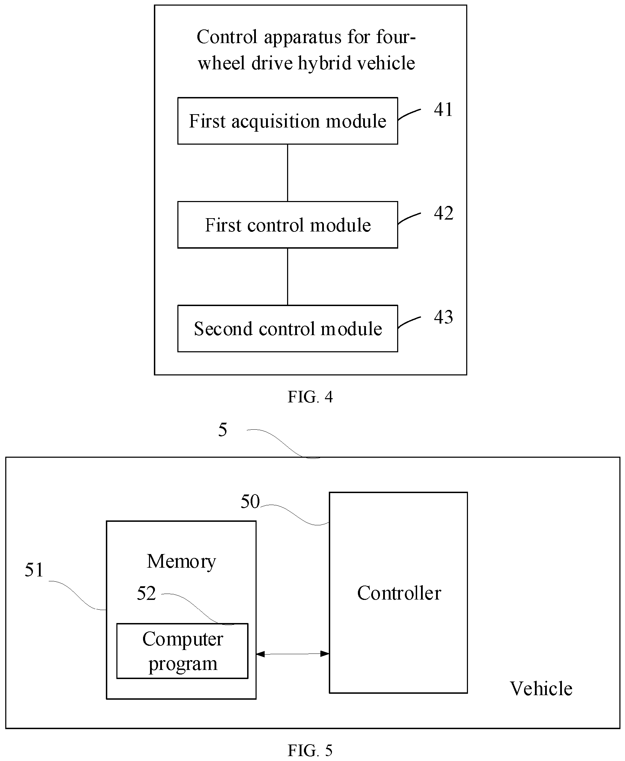

FIG. 4 is a schematic structural diagram of a control apparatus for a four-wheel drive hybrid vehicle according to an embodiment of the present disclosure. As shown in FIG. 4, the control apparatus for the four-wheel drive hybrid vehicle includes:
a first acquisition module 41, configured for acquiring a gear state of a front axle gearbox and a gear state of a rear axle gearbox;
a first control module 42, configured for controlling a front axle drive motor to maintain a current torque ratio when a gear state of the front axle gearbox is in gear shifting; and
a second control module 43, configured for controlling the torque ratio of the front axle drive motor to increase to a preset ratio when the gear state of the rear axle gearbox is in the gear shifting.

In one embodiment of the present disclosure, the control apparatus for the four-wheel drive hybrid vehicle further includes:
a second acquisition module, configured for acquiring an operation mode of the vehicle;
a third control module, configured for controlling the front axle drive motor to maintain a current torque ratio when the operation mode of the vehicle is in a process of switching from a series mode to an engine direct drive mode.

In one embodiment of the present disclosure, the control apparatus for the four-wheel drive hybrid vehicle further includes:
a fourth control module, configured for controlling the torque ratio of the front axle drive motor to increase to 100% when the gear state of the rear axle gearbox is in neutral for a duration greater than a preset time.

In one embodiment of the present disclosure, the second control module 43 includes:
an acquisition unit, configured for acquiring a first rate for unloading a torque ratio of a rear axle drive motor;
a control unit, configured for controlling the front axle drive motor to increase the torque ratio to the preset ratio according to the first rate.

It can be clearly understood by a person skilled in the art that, for the convenience and brevity of description, the above-mentioned division of various functional units and modules is merely exemplified, and in practical applications, the above-mentioned function allocation can be completed by different functional units and modules according to needs, namely, the internal structure of the apparatus is divided into different functional units or modules so as to complete all or part of the functions described above. Each functional unit and module in the embodiments may be integrated in one processing unit, or each unit may physically exist separately, or two or more units may be integrated in one unit, and the above-mentioned integrated units may be implemented in the form of hardware or software functional units. In addition, the specific names of various functional units and modules are merely for facilitating mutual distinction and are not used to limit the scope of protection of the present disclosure. The specific working processes of the units and modules in the above-mentioned system can be referred to as the corresponding processes in the above-mentioned method embodiments and will not be described in detail herein.

FIG. 5 is a schematic structural diagram of a vehicle according to an embodiment of the present disclosure. As shown in FIG. 5, the vehicle 5 in the embodiment may include: at least one controller 50 (only one controller 50 is shown in FIG. 5), a memory 51, and a computer program 52 stored in the memory 51 and executable on the at least one controller 50. The controller 50, when executing the computer program 52, implements the steps in any of the various method embodiments described above, such as steps S101 to S103 in the embodiment shown in FIG. 1. Alternatively, the controller 50, when executing the computer program 52, implements the functions of the various modules/units of the various apparatus embodiments described above, such as the functions of the modules 41 to 43 shown in FIG. 4.

Illustratively, the computer program 52 may be partitioned into one or more modules/units that are stored in the memory 51 and executed by the controller 50 to perform the present disclosure. The one or more modules/units may be a series of computer program 52 instruction segments capable of performing specific functions to describe the execution of the computer program 52 in the vehicle 5.

The controller 50 may be referred to as a central processing unit (CPU), the controller 50 may be another general purpose controller, a digital signal processor (DSP), an application specific integrated circuit (ASIC), a field-programmable gate array (FPGA) or other programmable logic devices, a discrete gate or transistor logic device, a discrete hardware component, etc. The general purpose controller may be a microcontroller or the controller may be any conventional controller or the like.

The memory 51 may in some embodiments be an internal storage unit of the vehicle 5, such as a hard disk or memory of the vehicle 5. The memory 51 may also be an external storage device of the vehicle 5 in another embodiments, such as a plug-in hard disk, a smart media card (SMC), a secure digital (SD) card, a flash card, etc. provided on the vehicle 5. Further, the memory 51 may include both an internal storage unit and an external storage device of the vehicle 5. The memory 51 is used for storing an operating system, application programs, a Boot Loader, data, and other programs, etc. such as the program code of the computer program 52, etc. The memory 51 may also be used to temporarily store data that has been output or is to be output.

Embodiments of the present disclosure also provide a computer-readable storage medium storing a computer program 52 which, when executed by the controller 50, performs steps in implementing the various method embodiments described above.

Embodiments of the present disclosure provide a computer program product which, when run on a mobile terminal, causes the mobile terminal, when executed, to implement the steps in the various method embodiments described above.

The integrated unit, if implemented in the form of a software functional unit and sold or used as a stand-alone product, may be stored in a computer-readable storage medium. Based on such an understanding, the present disclosure, implementing all or part of the flow of the methods of the embodiments described above, may be accomplished by instructing the associated hardware through a computer program 52, which may be stored in a computer-readable storage medium, which when executed by the controller 50, may implement the steps of the various method embodiments described above. The computer program 52 includes, among other things, computer program code in the form of source code, object code, executable files, or some intermediate form. The computer readable medium may include at least: Any entity or apparatus capable of carrying computer program code to a terminal device, recording medium, computer memory, ROM (Read-Only Memory), RAM (Random Access Memory), electrical carrier signal, telecommunications signal, and software distribution medium. Examples are U-disks, removable hard disks, magnetic or optical disks, etc. In some jurisdictions, the computer readable medium may not be an electrical carrier wave signal or a telecommunication signal in accordance with legislation and patent practice.

In the above-mentioned embodiments, the description of each embodiment has its own emphasis, and parts that are not detailed or described in a certain embodiment can be referred to the description of other embodiments.

Persons skilled in the art would recognize that the various illustrative elements and algorithm steps described in connection with the embodiments disclosed herein may be implemented as electronic hardware or combinations of computer software and electronic hardware. Whether such functionality is implemented as hardware or software depends upon the particular application and design constraints imposed on the implementation. Skilled artisans may implement the described functionality in varying ways for each particular application, but such implementation decisions should not be interpreted as causing a departure from the scope of the present disclosure.

In the embodiments provided in the present disclosure, it should be understood that the disclosed apparatus/network devices and methods may be implemented in other ways. For example, the apparatus/network device embodiments described above are merely illustrative, e.g. the partitioning of modules or units is merely a logical function partitioning, and actual implementations may have additional partitioning, e.g. multiple units or components may be combined or integrated into another system, or some features may be omitted, or not performed. Alternatively, the couplings or direct couplings or communication connections shown or discussed with respect to each other may be indirect couplings or communication connections through some interface, apparatus or unit, and may be electrical, mechanical or otherwise.

The elements described as separate elements may or may not be physically separated, the elements shown as elements may or may not be physical elements, i.e. may be located in one place or may be distributed over a plurality of network elements. Some or all of the elements may be selected to achieve the objectives of the embodiments according to actual needs.

The above-mentioned embodiments are merely illustrative of the technical solutions of the present disclosure, rather than limiting the same; although the present disclosure has been described in detail with reference to the foregoing embodiments, those skilled in the art will appreciate that: The technical solutions disclosed in the above-mentioned embodiments can still be modified, or some of the technical features thereof can be replaced by equivalents; however, these amendments or substitutions do not depart from the spirit and scope of the technical solutions of the various embodiments of the present disclosure in nature, and are all included in the scope of protection of the present disclosure.

## Claims

1. A control method for a four-wheel drive hybrid vehicle, **characterized by** comprising:
acquiring a gear state of a front axle gearbox and a gear state of a rear axle gearbox;
controlling a front axle drive motor to maintain a current torque ratio when the gear state of the front axle gearbox is in gear shifting; and
controlling the torque ratio of the front axle drive motor to increase to a preset ratio when the gear state of the rear axle gearbox is in the gear shifting.

2. The control method for the four-wheel drive hybrid vehicle according to claim 1, **characterized in that** the control method for the four-wheel drive hybrid vehicle further comprises:
acquiring an operation mode of the vehicle; and
controlling the front axle drive motor to maintain the current torque ratio when the operation mode of the vehicle is in a process of switching from a series mode to an engine direct drive mode.

3. The control method for the four-wheel drive hybrid vehicle according to claim 1, **characterized in that** the control method for the four-wheel drive hybrid vehicle further comprises:
controlling the torque ratio of the front axle drive motor to increase to 100% when the gear state of the rear axle gearbox is in neutral for a duration greater than a preset time.

4. The control method for the four-wheel drive hybrid vehicle according to claim 1, **characterized in that** the controlling the torque ratio of the front axle drive motor to increase to the preset ratio when the gear state of the rear axle gearbox is in the gear shifting, comprises:
acquiring a first rate for unloading a torque ratio of a rear axle drive motor; and
controlling the front axle drive motor to increase the torque ratio to the preset ratio according to the first rate.

5. A control apparatus for a four-wheel drive hybrid vehicle, **characterized by** comprising:
a first acquisition module, configured for acquiring a gear state of a front axle gearbox and a gear state of a rear axle gearbox;
a first control module, configured for controlling a front axle drive motor to maintain a current torque ratio when a gear state of the front axle gearbox is in gear shifting; and
a second control module, configured for controlling the torque ratio of the front axle drive motor to increase to a preset ratio when the gear state of the rear axle gearbox is in the gear shifting.

6. The control apparatus for the four-wheel drive hybrid vehicle according to claim 5, **characterized in that** the control apparatus for the four-wheel drive hybrid vehicle further comprises:
a second acquisition module, configured for acquiring an operation mode of the vehicle; and
a third control module, configured for controlling the front axle drive motor to maintain a current torque ratio when the operation mode of the vehicle is in a process of switching from a series mode to an engine direct drive mode.

7. The control apparatus for the four-wheel drive hybrid vehicle according to claim 5, **characterized in that** the control apparatus for the four-wheel drive hybrid vehicle further comprises:
a fourth control module, configured for controlling the torque ratio of the front axle drive motor to increase to 100% when the gear state of the rear axle gearbox is in neutral for a duration greater than a preset time.

8. The control apparatus for the four-wheel drive hybrid vehicle according to claim 5, **characterized in that** the second control module comprises:
an acquisition unit, configured for acquiring a first rate for unloading a torque ratio of a rear axle drive motor; and
a control unit, configured for controlling the front axle drive motor to increase the torque ratio to the preset ratio according to the first rate.

9. A vehicle, comprising a memory, a controller, and a computer program stored in the memory and executable on the controller, **characterized in that** the controller, when executing the computer program, implements the method according to any one of claims 1 to 4.

10. A computer-readable storage medium, storing a computer program, **characterized in that** the computer program, when executed by a controller, implements the method according to any one of claims 1 to 4.
